# EUROPEAN PATENT APPLICATION

(11) **EP 3 216 631 A1**
(43) Date of publication of application: **13.09.2017**
(21) Application number: 17157691.1
(22) Date of filing: 23.02.2017
(51) Int. Cl.: B60G 9/00, B60G 11/26, B60G 11/28

(54) **OIL-HYDRAULIC SUSPENSION FOR VEHICLES**

(30) Priority: 07.03.2016 IT UA20161400
(71) Applicant: R.P.F. S.p.A., 21040 Uboldo (Varese) (IT)
(72) Inventor: RADRIZZANI, Flavio, 21040 Uboldo (Varese) (IT)
(74) Representative: Rapisardi, Mariacristina

(57) **Abstract**

The oil-hydraulic suspension (1) for connecting a chassis to an axle (3) of a vehicle comprises a main load-bearing body (4) that is coupleable to the chassis of the vehicle, an oil-hydraulic suspension cylinder (5) hinged to the main load-bearing body (4), a connecting arm (7) for connecting the axle (3) to the main load-bearing body (4) hinged to the main load-bearing body (4), and fastening means for fastening the connecting arm (7) to the axle (3), the fastening means comprising a fastening member (9) to which the suspension cylinder (5) is hinged, there also being provided a constraining means between the fastening member (9) and the connecting arm (7).

## Description

The present invention refers to an oil-hydraulic suspension for connecting a chassis to an axle of a vehicle.

A traditional oil-hydraulic suspension generally comprises a main load-bearing body that is coupleable to the chassis of the vehicle, an oil-hydraulic suspension cylinder hinged to the chassis of the vehicle, a connecting arm for connecting the axle to the main load-bearing body hinged to the main body, and specific fastening members for fastening the arm to the axle.

Oil-hydraulic suspensions are among those most widely used on tractor-drawn farm machinery, in place of the traditional mechanical leaf spring suspensions.

An oil-hydraulic suspension enables homogeneous distribution of the weight of the vehicle on the wheels and therefore optimal traction even in the presence of dynamic loads because the hydraulic circuit keeps all actuators at the same pressure.

And oil- hydraulic suspension also makes it possible to adjust the ground clearance of the vehicle by intervening on the volume of fluid in the actuators.

Lastly, an oil-hydraulic suspension optimizes the drive behaviour/ride comfort by coupling one or more elastic elements, for example inert gas accumulators, to the rigid oil-hydraulic circuit.

Among other things, advantageously, supply through the hydraulic system is standard for all tractors.

It is known a type of oil-hydraulic suspension in which the upper end of the cylinder is fastened to the main load-bearing body, whereas the lower end is connected under the axle on the side facing the direction of travel.

It is also known another type of oil-hydraulic suspension in which the upper end of the cylinder is fastened to the chassis of the vehicle in a position higher than the fastening plane of the main load-bearing body, whereas the lower end is connected above the axle on the side facing the direction of travel.

Both cases structurally require that the cylinders be positioned externally of the longitudinal members of the chassis.

In the first case, it is because the low attachment of the cylinder requires its passage alongside the arm and in the second case it is because the high attachment of the cylinder ends up above the lower edge of the longitudinal member and it has to pass alongside it.

It should also be noted that in both cases, the cylinder is connected to the axle on the side facing the direction of travel, and that therefore its action generates a twisting moment on the axle which must be opposed by the arm fastening members.

Moreover, the reaction transmitted by the upper end of the cylinder to the external wall of the longitudinal member applies a twisting moment to the same longitudinal member.

In the state of the art, there are also solutions in which the oil-hydraulic suspension has the cylinder arranged coplanar under the longitudinal member of the chassis, so that, with the dimensions of the wheels and the axle track being equal with respect to the previously described solutions, the centre-to-centre distance between the longitudinal members can be increased because the cylinder is not interposed between the wheel and the longitudinal member.

This latter solution favours torsional rigidity of the chassis and there is no local twisting of the longitudinal members.

In this solution, although the cylinders overlie the suspension arms, the axle is in any case subjected to a significant twisting moment.

The technical task of the present invention is therefore to realize an oil-hydraulic suspension for vehicles that makes it possible to eliminate the cited technical drawbacks of the prior art.

Within the scope of this technical task, an aim of the invention is to realize an oil-hydraulic suspension for vehicles that is configured to discharge forces to the ground without a concentration of stresses on the components of the suspension itself, of the axle and the chassis.

Another aim of the invention is to realize an oil-hydraulic suspension for vehicles that is configured to limit or eliminate localized twisting affecting the longitudinal member of the chassis.

Another aim of the invention is to realize an oil-hydraulic suspension for vehicles that is configured to limit or eliminate localized twisting affecting the axle of the vehicle.

Another aim of the invention is to realize an oil-hydraulic suspension for vehicles that is configured to increase the centre-to-centre distance between the longitudinal members.

Another aim of the invention is to realize an oil-hydraulic suspension that can be installed on fixed axles and on steering axles.

The technical task, as well as these and other aims, according to the present invention, are achieved by realizing an oil-hydraulic suspension for connecting a chassis to an axle of a vehicle, and comprising a main load-bearing body that can be coupled to the chassis of the vehicle, an oil-hydraulic suspension cylinder hinged to the main load-bearing body, a connecting arm for connecting the axle to the main load-bearing body hinged to the main body, and fastening means for fastening the arm to the axle, said fastening means comprising a fastening member to which said suspension cylinder is hinged, there are also being provided a constraining means between said fastening member and said connecting arm, the oil-hydraulic suspension being configured so that the line of action of said suspension cylinder intersects the vertical line of action of the load on the wheel, always substantially within said connecting arm.

In a preferred embodiment of the invention, said fastening member is made up of a plate that engages along a longitudinal section of said connecting arm.

In a preferred embodiment of the invention, said constraining means locks said plate along said longitudinal section of said connecting arm.

In a preferred embodiment of the invention, the longitudinal axis of said suspension cylinder is arranged coplanar with a longitudinal median plane of said connecting arm.

In a preferred embodiment of the invention, said main load-bearing body, said suspension cylinder and said plate, which is locked along a longitudinal section of said connecting arm, form an arch structure with three hinges.

In a preferred embodiment of the invention, said plate has a seat for engaging the axle on the side opposite the side for engagement to said connecting arm.

In a preferred embodiment of the invention, the hinging of said plate with said suspension cylinder is found on the same side of the plate where said seat for engagement with the axle is provided.

In a preferred embodiment of the invention, said constraining means comprises a counter plate having a seat for engaging the axle, and tie-rods for securing said axle between said plate and said counter plate.

The present invention also discloses a vehicle having such an oil-hydraulic suspension.

In a preferred embodiment of the invention, the suspension is mounted with the longitudinal axis of the suspension cylinder coplanar with a longitudinal median plane of the connecting arm and with a longitudinal median plane of a longitudinal member of the chassis of the vehicle.

Other characteristics of the present invention are further defined in the remaining dependent claims.

Further characteristics and advantages of the invention will become more apparent from the description of a preferred, but not exclusive, embodiment of the oil-hydraulic suspension according to the invention, which is illustrated by way of approximate and non-limiting example in the attached drawings, of which:

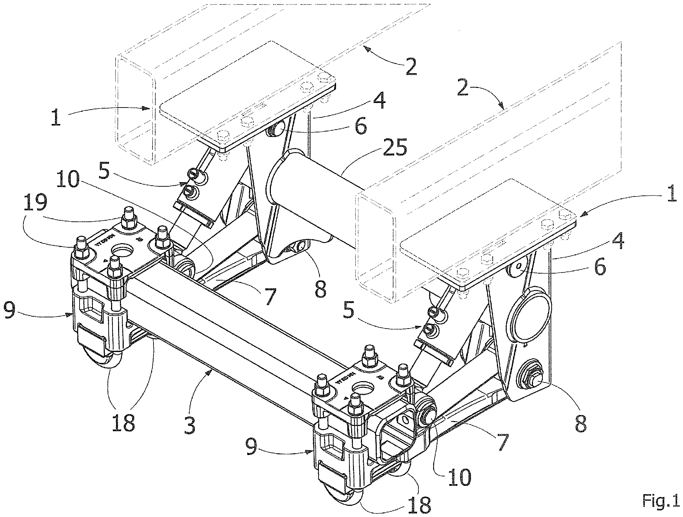

Figure 1 is an axonometric view of the two suspensions applied to an axle of a vehicle.
Figure 2 is a side elevation view of the suspension in the ride position.
Figure 3 is a side elevation view of the suspension in the completely lowered position.
Figure 4 is a side elevation view of the suspension at its maximum height position.
Figure 5 is a partially sectioned side elevation view of the suspension, in which a first embodiment of the constraining means between the suspension arm and the fastening member is highlighted.
Figure 6 is a partially sectioned side elevation view of the suspension, in which a second embodiment of the constraining means between the suspension arm and the fastening member is highlighted.

With reference to the figures cited, an oil-hydraulic suspension 1 for connecting a chassis, and particularly a longitudinal member 2 of the chassis, to an axle 3 bearing the wheels of a vehicle is shown.

The oil-hydraulic suspension 1 comprises a suitably shaped main load-bearing body 4 that is coupleable to the longitudinal member 2, an oil-hydraulic suspension cylinder 5, the upper end of which is joined in a hinged manner by means of a hinge axis 6 to the main load-bearing body 4, a longitudinal arm 7 for connecting the axle 3 to the main load-bearing body 4, positioned below the oil-hydraulic suspension cylinder 5 and joined in a hinged manner by means of a hinge axis 8 to the main load-bearing body 4, and fastening means for fastening the connecting arm 7 to the axle 3.

The fastening means 9 comprises a fastening member 9 to which the lower end of the suspension cylinder 5 is joined in a hinged manner by means of a hinge axis 10.

The oil-hydraulic suspension 1 advantageously comprises constraining means between the fastening member 9 and the connecting arm 7.

The fastening member 9 is advantageously made up of a plate 11 that engages along a longitudinal section 12 of the connecting arm 7.

More specifically, the plate 11 and the longitudinal section 12 of the connecting arm 7 are in contact along respective longitudinal plane surfaces.

The constraining means locks the plate 11 in contact along the longitudinal section 12 of the connecting arm 7.

The constraining means thus transmits forces directly from the suspension cylinder 5 to the connecting arm 7.

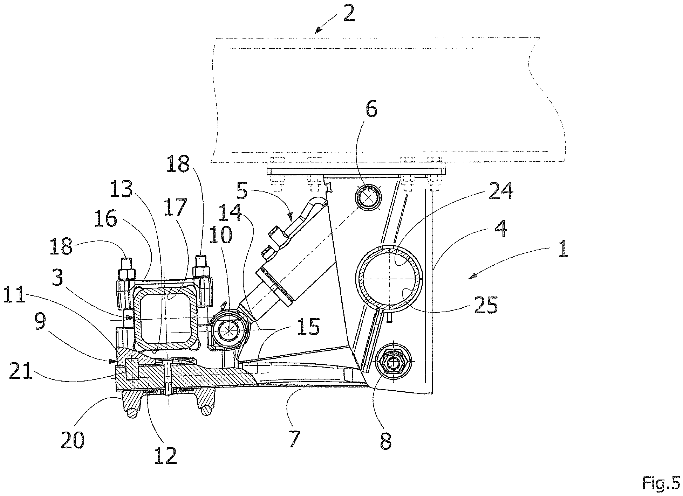

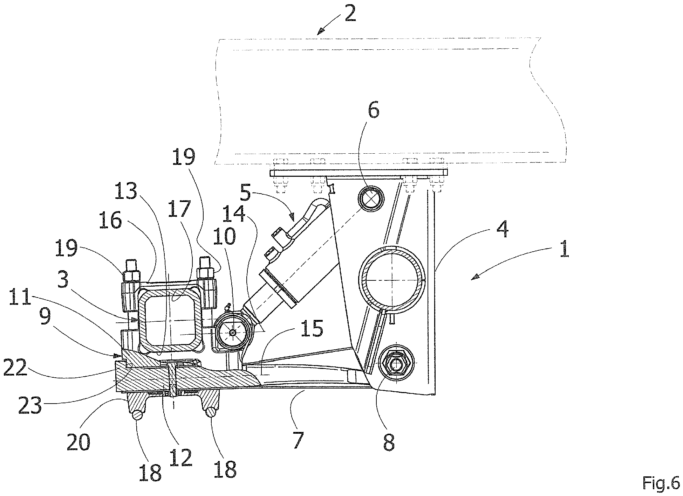

With reference to the embodiment illustrated in Figure 5, the constraining means between the fastening member 9 and the connecting arm 7 comprises for example a perpendicular connector pin 21 between the connecting arm 7 and the plate 11. With reference to the embodiment illustrated in Figure 6, the constraining means between the fastening member 9 and the connecting arm 7 comprises for example a projection 22 from the end of the connecting arm 7, said projection 22 being engaged with an abutment 23 on the plate 11. The projection 22 and the abutment 23 are positioned at the ends of the connecting arm 7 and the plate 11, respectively, opposite the ends having the hinge axes 8 and 10 for hinging to the load-bearing body 4 and to the suspension cylinder 5, respectively.

The inclination of the axis of the suspension cylinder 5 is such as to transmit, to the connecting arm 7, by virtue of the rigid constraint with the fastening member 9, a force having a significant axial traction component acting upon the connecting arm 7.

The longitudinal axis of the suspension cylinder 5 is arranged coplanar with a longitudinal median plane of the connecting arm 7 perpendicular to the hinge axes 6, 8, 10 and with a longitudinal vertical median plane of the longitudinal member 2 of the chassis of the vehicle.

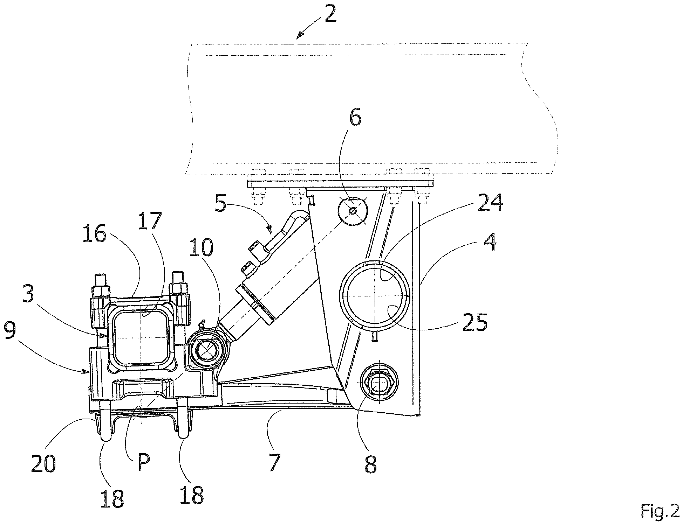

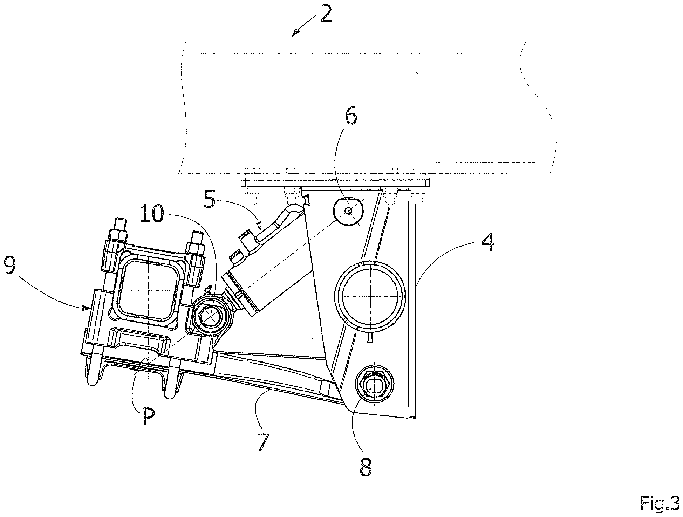

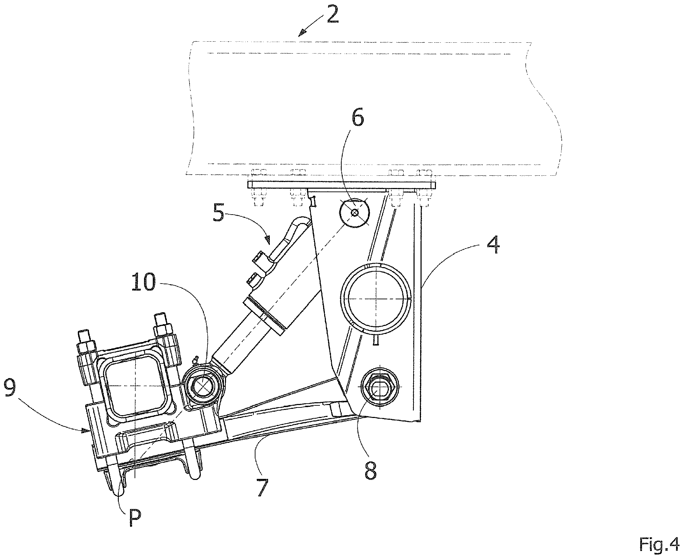

The main load-bearing body 4, the suspension cylinder 5, and the plate 11 locked on the connecting arm 7 form an arch structure with three hinges 6, 8, 10.As is evident from Figures 2, 3 and 4, the line of action of the suspension cylinder 5 intersects in P the vertical line of action of the load on the wheel, always substantially within the connecting arm 7 for connection to the axle 3.

Given that the forces transmitted act directly on the connecting arm 7 located vertically below the suspension cylinder 5, the twisting moment on the assembly made up of the axle 3 and the fastening member 9 is reduced to a minimum.

The plate 11 has a seat 13 for engaging the axle 3 on the upper longitudinal side opposite the lower side for engagement to the connecting arm 7.

The lower portion of the axle 3 is housed within the engagement seat 13.

The plate 11 supports the hinge axis 10 with the suspension cylinder 5 above and arranges it between the axle 3 and the main load-bearing body 4.

The hinge axis 10 of the plate 11 with the suspension cylinder 5 is contained in a plane 14 intersecting the axle 3 and parallel to a median plane 15 of the plate 11 parallel to the hinge axes 6, 8, 10.

The fastening means for fastening the connecting arm 7 to the axle 3 further comprises a counter plate 16 that has a seat 17 for engaging the axle 3, and tie-rods 18 for securing the axle 3 between the plate 11 and the counter plate 16.

The engagement seat 17 in the counter plate 16 receives the upper portion of the axle 3 and, as in the case of the plate 11, it is provided with through holes for passage of the tie-rods 18, which, by means of fastening nuts 19, secure the axle 3 between the counter plate 16 and the plate 11.

Lastly, as the tie-rods 18 are U-shaped, the fastening means for fastening the connecting arm 7 to the axle 3 comprises an insert 20 having adjustment portions connected, on one end, to the flat side of the connecting arm 7 opposite the one for engagement with the plate 11, and on the other end, to the internal side of the arcuate section of the tie-rods 18.

The main load-bearing body 4 has a circular opening 24 of a suitable diameter that receives a tube 25 welded to the main load-bearing body 4 so as to contribute to the rigidity of the chassis of the vehicle. Therefore, it will not be necessary to have the crossmembers of the chassis correspond with the fastening areas of the main load-bearing body of the suspension. In this manner, the choice for positioning the suspension with respect to the chassis involves only the functional requirements of the vehicle itself, without any influence on the vehicle's structure.

The structure thus realized for the suspension 1 offers numerous advantages.

All the forces act upon the same plane, that is, the vertical plane parallel to the longitudinal axis of the vehicle and generally coincident with the median plane of the longitudinal member of the chassis. In this manner, said forces have no components or moments that could create local stresses in the structures of the suspension or the chassis of the vehicle.

The suspension cylinder acts upon the main load-bearing body and therefore the longitudinal member of the chassis is not subject to concentrated forces.

The suspension cylinder can be assembled in both the configuration shown, that is, with the stem connected to the fastening member and the chamber joined in a hinged manner to the main load-bearing body, and with the stem joined in a hinged manner to the main load-bearing body and the chamber connected to the fastening member. The first solution makes it possible to reduce the length and relative movements of the supply lines with respect to the chassis of the vehicle with a reduction of the effects of fatigue on these lines and the relative fittings. The second solution makes it possible to have the cylinder stems and the relative oil-hydraulic sealing members arranged in a position protected from impacts and from aggressive environmental agents.

The design solution adopted for the fastening member, that is to say, a plate that incorporates the hinge for joining the suspension cylinder, offers virtually complete freedom in the realization of the connection of the axle to the suspension. The constraining means entails stable coupling of the fastening member with the connecting arm, and therefore for any adjustments of the alignment of the hinge axes with respect to the geometric axis of the vehicle, the hinges used are adjustable hinges with a cam system already known in the state of the art.

Thus conceived, the oil-hydraulic suspension is susceptible to numerous modifications and variants, all of which falling within the scope of the inventive concept. Moreover, all details may be replaced with other technically equivalent elements.

The materials used, as well as the dimensions, may in practice be of any type, according to needs and the state of the art.

## Claims

1. An oil-hydraulic suspension (1) for connecting a chassis to an axle (3) of a vehicle, and comprising a main load-bearing body (4) that is coupleable to the chassis of the vehicle, an oil-hydraulic suspension cylinder (5) hinged to the main load-bearing body (4), a connecting arm (7) for connecting the axle (3) to the main load-bearing body (4) hinged to the main load-bearing body (4), and fastening means for fastening the connecting arm (7) to the axle (3), said fastening means comprising a fastening member (9) to which said suspension cylinder (5) is hinged, there also being provided a constraining means between said fastening member (9) and said connecting arm (7), and **characterized in that** it is configured so that the line of action of said suspension cylinder (5) intersects the vertical line of action of the load on the wheel, always substantially within said connecting arm (7).

2. The oil-hydraulic suspension (1) for suspending a chassis from an axle of a vehicle according to claim 1, **characterized in that characterized in that** said fastening member (9) is made up of a plate (11) that engages along a longitudinal section (12) of said connecting arm (7).

3. The oil-hydraulic suspension (1) for suspending a chassis from an axle of a vehicle according to the preceding claim, **characterized in that** said constraining means locks said plate (11) along said longitudinal section (12) of said connecting arm (7).

4. The oil-hydraulic suspension (1) for suspending a chassis from an axle of a vehicle according to claim 1, **characterized in that** the longitudinal axis of said suspension cylinder (5) is arranged coplanar with a longitudinal median plane of said connecting arm (7).

5. The oil-hydraulic suspension (1) for suspending a chassis from an axle of a vehicle according to claim 2, **characterized in that** said main load-bearing body (4), said suspension cylinder (5) and said plate (11), which is locked along said longitudinal section (12) of said connecting arm (7), form an arch structure with three hinges.

6. The oil-hydraulic suspension (1) for suspending a chassis from an axle of a vehicle according to the preceding claim, **characterized in that** said plate (11) has a seat (13) for engaging the axle (3) on the side opposite the side for engagement to said connecting arm (7).

7. The oil-hydraulic suspension (1) for suspending a chassis from an axle of a vehicle according to the preceding claim, **characterized in that** the hinging of said plate (11) with said suspension cylinder (5) is found on the same side of the plate (11) where said seat (13) for engagement with the axle (3) is provided.

8. The oil-hydraulic suspension (1) for suspending a chassis from an axle of a vehicle according to claim, 1 **characterized in that** said constraining means comprises a connector pin (21).

9. The oil-hydraulic suspension (1) for suspending a chassis from an axle of a vehicle according to claim, 1 **characterized in that** said constraining means comprises a projection (22) engaged with an abutment (23).

10. The oil-hydraulic suspension (1) for suspending a chassis from an axle of a vehicle according to claim 1, **characterized in that** said main load-bearing body (4) has an opening (24) in which a tube (25) for structural stiffening is fastened.

11. The oil-hydraulic suspension (1) for suspending a chassis from an axle of a vehicle according to claim 1, **characterized in that** at least one of the hingings comprises an adjustable hinge with a cam system.

12. A vehicle **characterized in that** it comprises an oil-hydraulic suspension (1) according to any one of the preceding claims, wherein said suspension (1) is mounted with the longitudinal axis of the suspension cylinder (5) coplanar with a longitudinal median plane of the connecting arm (7) and with a longitudinal median plane of a longitudinal member (2) of the chassis of the vehicle.

13. The vehicle according to the preceding claim, **characterized in that** the hinging axis (10) between said suspension cylinder (5) and said plate (11) is contained in a plane (14) intersecting the axle (3) and parallel to a longitudinal median plane (15) of the plate (11).
